# EUROPEAN PATENT APPLICATION

(11) **EP 4 505 873 A1**
(43) Date of publication of application: **12.02.2025**
(21) Application number: 24193268.0
(22) Date of filing: 07.08.2024
(51) Int. Cl.: A01N 25/02, A01N 33/12, A01P 1/00

(54) **NEW COMPOSITION AND METHOD FOR COLOURING SOLUTIONS BASED ON A BIOCIDAL ACTIVE PRINCIPLE, SUCH AS CHLORHEXIDINE OR OTHER CATIONIC BISBIGUANIDES OR BISBIGUANIDES**

(30) Priority: 09.08.2023 IT 202300017007
(71) Applicant: Angiover S.r.l., 37032 Monteforte d'Alpone (VR) (IT)
(72) Inventor: PRETO, Andrea, 37032 Monteforte d'Alpone (Verona) (IT)
(74) Representative: Feltrinelli, Secondo Andrea

(57) **Abstract**

The invention relates to a liquid aqueous, hydroalcoholic or alcoholic composition comprising at least one biocidal active substance and at least one dye.

## Description

### TECHNICAL FIELD OF INVENTION

The present invention concerns a new method and composition for colouring a biocidal active substance, such as chlorhexidine in any form of salt or other cationic bisbiguanides or bisbiguanides in aqueous, hydroalcoholic and alcoholic solution. This colour is such that it can highlight the area of the skin in which the solution is applied, thus becoming a product for the delimitation of the operating field.

### STATE OF THE ART

Now for several years, that is since the discovery and commercialization of the Povidone Iodinated (early 50's), which has solved many of the application problems of the Lugol solution, aqueous solutions of this active substance are used at a concentration ranging from 7.5 to 10 % w/w (weight/weight) and with a consequent iodine concentration available between 0.75% and 1.0% in the delineation of the surgical area, the skin area where a subsequent surgery is performed.

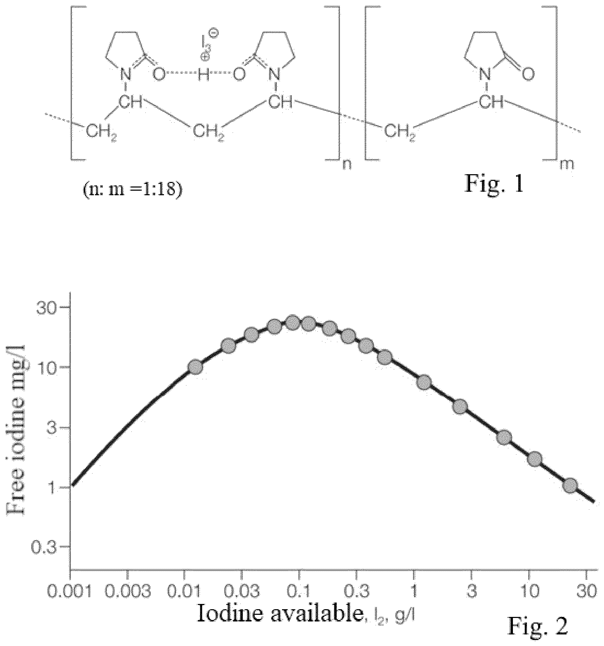

The main characteristics that have made the use of this active substance useful as a medicinal product for the delimitation of the operative field, in addition to the typical brown coloration of iodine, is its persistence of biocidal effect over time, Basically, the constant release of "active iodine" into the aqueous solution is achieved through a series of balances, the main one being that between PVP-complexed iodine and free active iodine as shown in figure 1 and 2.

However, it has been discovered over time that active iodine I2, by its apolar characteristic, can sometimes cross the skin barrier and penetrate into the bloodstream, being absorbed, leading sometimes to dysfunctions of the thyroid gland.

For this, we have tried to find an alternative active ingredient, that is, with overlapping biocidal characteristics, but without the side effects described above. Among all the biocidal active ingredients, chlorhexidine digluconate was identified as a potential substitute, since once applied to the skin, it also remains "adsorbed" due to its double positive charge, that is, attached by electrostatic attraction to the skin surface in which negative charges (electrons) normally circulate, without crossing the skin barrier.

Not surprisingly for the disinfection of surgical hands have been established in time liquid soap antiseptic based on chlorhexidine gluconate 4%, while for washing the patient, before surgery, soap based on chlorhexidine gluconate 2%. For disinfection instead of skin in injection therapy and other applications on injured skin, aqueous and predominantly alcoholic compositions based on 0% chlorhexidine gluconate have been introduced over time,5 and 2.0% w/w, as ethyl or isopropyl alcohol act rapidly on the transient microbe flora and after their evaporation leave adsorbed on the skin a chlorhexidine micro-layer which ensures a persistent biocidal or biostatic effect in the time.

However, all these solutions are colourless and as such do not lend themselves to a delimitation of the operating field, since, unlike Povidone iodinated, they do not leave a visible trace on the treated skin.

The incompatibility of chlorhexidine with all food-grade dyes is known, since they all have anionic functional groups in their chemical structure.

There are a limited number of approved dyes that can be used to colour chlorhexidine solutions, and these too are naturally anionic and therefore not completely compatible. They can generally be added at low concentrations to colour chlorhexidine solutions for identification purposes, but are responsible for precipitation of the same when used at higher concentrations, necessary to ensure good property for the stain of the skin.

Thus, for example, carmoisine (E122), one of the dyes with the greatest compatibility with chlorhexidine digluconate, at a concentration of 0.0005% w/w provides good coloration for the target identification of a solution that remains stable for a long time. At a concentration of 0.05% w/w, it has good skin-stain properties but precipitates with chlorhexidine during storage, for the formation of complex salts between dye and chlorhexidine which attract each other by having opposite charge. This solution has a half-life of 7 days after which it must be discarded.

Based on this bibliographical knowledge, 3 product lines have established themselves in the skin disinfection market, each of which has its own limiting elements.

In accordance with the first product line, alcoholic solutions with 70% ethyl or isopropyl alcohol v/v or p/p have been proposed on the basis of 0.5% chlorhexidine gluconate or 2.0% + concentrated dye solution ( 0.05%) based on E122 or other dyes, Stored separately and mixed together at the time of use to provide a ready-to-use solution that can stain skin well (e.g. Citroclorex 2% Red; Nexclorex 2% Red, ChloraPrep applicators). These compositions have at least three limiting elements:
a) When the colour pre-dosed is mixed with the chlorhexidine gluconate solution, the resulting composition shall be used as soon as possible, irrespective of the generally stated 72 hours stability time (within a few hours, as the precipitation process begins after about 2-3 hours) and completely in order to avoid that respectively with the passage of time and in the residual solution, the precipitate is formed which significantly reduces the concentration of active substance in the solution used and therefore its biocidal efficacy;
b) these compositions are generally stored and distributed on the market in small containers of not more than 250 ml in such a way that, once their colouring is completed, no residue remains in the container; This significantly hampers the use of these products as it is not allowed to have a flexible dosage in the short-medium term and appropriate to the range to be achieved; for example, if it is necessary to repeat within the working day, in 3 shots with a distance from each other of more than 2 hours, boundaries that require 300 ml of solution, which are neither multiples of 120 nor 250 ml (commercially available containers), 3+3+3 bottles of 120 ml or 6 bottles of 250 ml must be used each time with the result that product is wasted, instead of having a 1 litre bottle of a stably coloured solution;
c) these compositions once coloured and applied on the skin, may suffer a reduction in biocidal efficacy due to electrostatic attraction by the dye on chlorhexidine digluconate molecules which are no longer free to exercise their mechanism of action on the membranes of micro-organisms; The biocidal efficacy of all these compositions has been demonstrated on colourless solution.

Sometimes the above solutions once coloured are inserted into applicators with sponge, in such a way that the soaked sponge becomes a useful means of distribution on the skin. These are syringes with a membrane and a sponge instead of the needle, so that the membrane breaks by pressure, the liquid can be soaked with the dye and then on the sponge.

In accordance with the second product line, alcoholic solutions with ethyl or isopropyl alcohol 70% v/v or p/p are proposed on a basis of 0.5% chlorhexidine gluconate or 2.0% p/p or p/v coloured with E122 dye or other dyes in concentrations > 0,0005% and < 0.05% p/p or p/v not very stable and which do not provide a visible skin colour; even these solutions, like the previous ones, are sometimes inserted into the applicators described above, with poor colouring result.

According to a third line of products, alcoholic solutions with 70% ethyl or isopropyl alcohol have been marketed v/v or p/p based on 0.5% chlorhexidine gluconate or 2.0% p/p or p/v coloured with E122 dye or other dyes in concentrations 0,0005% stable and which do not provide any skin colour and whose colour has only an identification function.

All the solutions described above are, however, deficient in the presence of alcohols, which have little significance in the field of delimitation of the operative field, since they do not require a rapid biocide action but rather a persistence of effect, Not surprisingly, the solutions for the delimitation of the surgical field based on Povidone Iodinated are only watery.

Sometimes the presence of alcohols also becomes a limiting element in this application because in surgical operations you can use electrobisturi or other electrical devices that may cause fire triggers in the presence of a flammable material such as alcohols.

For such applications it would be preferable to use a stably coloured aqueous solution based on chlorhexidine digluconate at 2% w/w, able to stain the skin.

KR20090034309A, US2008108674A1 and CN101511325A describe solutions according to the prior state of the art.

### OBJECTS OF THE INVENTION

One object of the present invention is to teach a new disinfectant or biocide composition, with a specific biocide active substance, such as chlorhexidine gluconate or bisbiguanide or cationic bisbiguanide in aqueous, hydroalcoholic and alcoholic solution.

Another object of the present invention is to provide a composition as above which is stably coloured with a food-grade dye and with a quantity of dye such that it visibly stains the skin.

Another object of the present invention is to provide a composition as above which has a long half-life, that is a useful life with biocidal or disinfectant properties unaltered or otherwise maintained in a satisfactory way, even more than 12 months, if desired also 24 and/or 36 months, if properly stored.

Another object of the present invention is to teach a new method for obtaining the above-mentioned composition.

In accordance with one aspect of the invention, a composition according to claim 1 is provided.

In accordance with another aspect of the invention, a method according to claim 12 is provided.

According to another aspect of the invention, a use according to claim 14 is envisaged.

Dependent claims refer to preferred and advantageous embodiments of the invention.

### BRIEF DESCRIPTION OF DRAWINGS

Other features and advantages of the invention will be more evident from the description of an embodiment of a composition and system also thanks to the attached drawings in which:
- figure 1 shows the chemical structure of Povidone-iodinated,
- figure 2 shows the ratio of active iodine concentration to the available iodine concentration in a solution containing Povidone-iodinated,
- figure 3 shows the formula of chlorhexidine digluconate,
- figure 4 shows the chemical structure of the dye azorubine (or carmoisine) E122,
- figure 5 illustrates a bi-layer structure formed by cetyltrimethylammonium chloride or CTAC or by cetyltrimethylammonium bromide or CTAB,
- figure 6 shows the chemical structure of the chloride of cetyltrimethylammonium or CTAC,
- figure 7 illustrates the chemical structure of Cocamide DEA.

### EMBODIMENTS OF THE INVENTION

The subject-matter of the present invention is a new aqueous, hydroalcoholic or alcoholic liquid composition, containing at least one biocidal active substance chosen from the group consisting of chlorhexidine gluconate or its other salts or other cationic bisbiguanides or bisbiguanides with a concentration ≥ 0,01 % w/w or w/v (weight by weight or weight by volume of the composition), if desired between 0.01% and 10% w/w or w/v, preferably between 0.2% and 4% w/w or w/v or between 0.5% and 2% w/w or w/v (weight by weight or weight by volume of the composition).

The composition of the present invention may be purely aqueous, hydroalcoholic (different alcohol content) or alcoholic and must have at least a good stability or half-life, for example of at least 1 month, preferably 12 or 24 or 36 months or more in perfectly closed and properly preserved packaging.

A composition as described above is intended to be used as a disinfectant or biocide, for example for the disinfection of parts of a patient's body before surgery or therapeutic or diagnostic treatment, for the disinfection of the hands of a surgeon or other medical and/or health care personnel, for the washing of a patient before an operation, for the disinfection of the skin of a patient in injection therapy and other skin applications, including on injured skin.

The composition then includes at least one dye intended to visibly stain the skin so that the presence of the composition on it can be seen even with the naked eye, clearly at a low distance from the zone treated with the composition, for example within 10 cm or more, even up to one-two meters from the zone treated with the composition.

The dye is preferably a food grade dye, preferably including anionic functional groups in its chemical structure.

Clearly, the composition can have one or more dyes, with preference for the red color provided by the dye E122 (Azorubina) or brown as that provided by the dye Bruno Caramellino. Mixtures of different dyes could be provided, for example one or more of the following and/or the above: E102 Tartrazine, E110 Sunset Yellow, E131 Patent Blue V, E133 Brilliant Blue, E151 Brilliant Black and others.

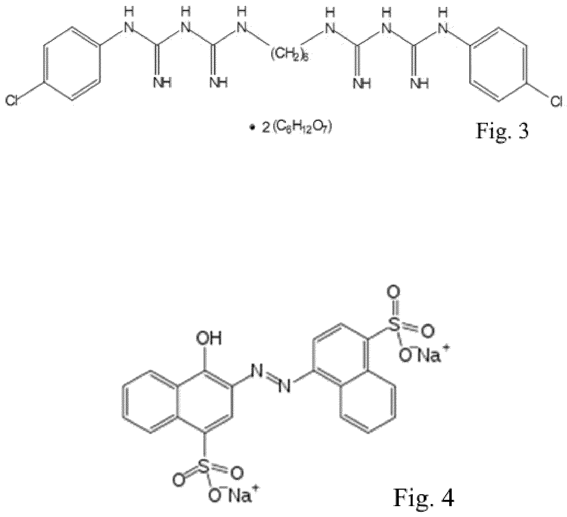

The chemical structure of the dye azorubine E122 is shown in figure 4.

The dye is present in any suitable percentage, for example in a quantity ≥ 0.01% w/w, if desired between 0.05% w/w and 1% w/w (weight by weight of the composition), for example about 0.4-0.5% or about 0.05-0.2% w/w.

The composition then comprises at least one quaternary ammonium salt with a long linear chain and three methyl bound to the nitrogen atom (N) intended to serve as an ingredient covering or masking the dye to the biocidal active substance or as an ingredient preventing electrostatic attraction between the double-positive biocidal active substance (chlorhexidine) and the anionic dye.

Preferably, the at least one quaternary ammonium salt comprises one or more of cetyltrimethylammonium chloride (CTAC) and/or bromide (CTAB) and/or hexadecyltrimethylammonium bromide, hexadecyltrimethylammonium chloride, dodecyltrimethylammonium chloride or tetradeciltrimethylammonium chloride or other salts thereof.

Advantageously, at least one quaternary ammonium salt is present in a quantity between 0.1% and 30% w/w (weight by weight of the composition), if desired between 10% and 30% w/w, for example between 10% and 15% w/w, particularly if the composition or active substance is in aqueous solution, or between 0.1% and 10% w/w, for example between 0.1% and 1% w/w or between 0.1% and 0.5% w/w, in particular if the composition or active substance is in hydroalcoholic or alcoholic solution.

In essence, this invention exploits the characteristics of a single-chain linear cationic surfactant, namely the mentioned above quaternary ammonium salt, preferably cethyltrimethylammonium chloride (CTAC) or bromide (CTAB).

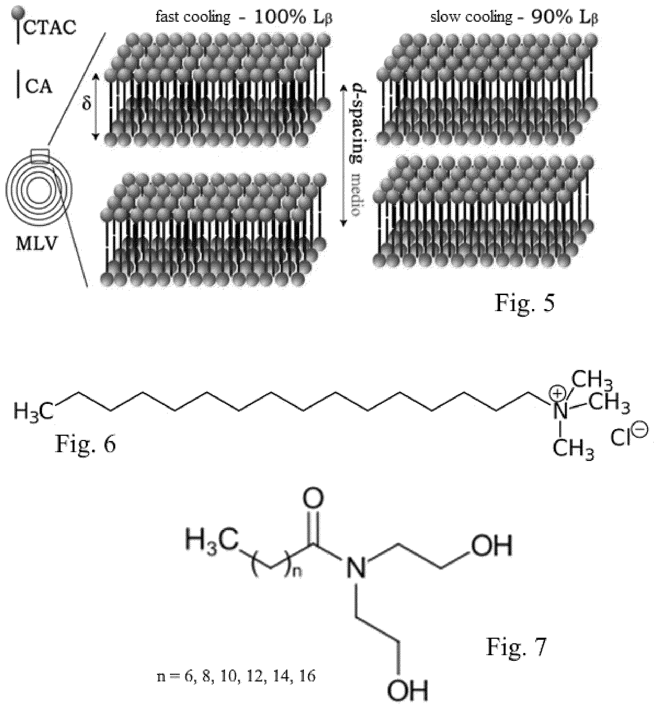

This type of cationic surfactants, due to their chemical structure based on a cationic head with a small steric footprint and a single linear chain, can form a bi-layer structure of the type shown in figure 5.

Figure 6 shows the chemical structure of CTAC.

It was verified that such a structure of a quaternary ammonium salt as indicated above surrounding the dye molecules, on the one hand neutralizes the negative charges of the latter and on the other hand forms a cationic head towards the outside by rejecting the approach of the biocidal active substance, such as chlorhexidine digluconate. This is understood as the covering or masking function of the above-mentioned quaternary ammonium salt.

This combination of components determines a perfectly stable coloured solution containing the active biocidal substance, chlorhexidine digluconate or its salts or other cationic bisbiguanides or bisbiguanides, at a concentration ≥ 0,01 % w/w of the composition, preferably between 0.01% and 10% weight by weight of the composition, more preferably between 0.2% and 2% w/w or between 0.5% and 4% w/w.

The molar or molecular ratio of CTAC or CTAB or other similar quaternary ammonium salts, compared to the dye with double negative charge such as E122, is always advantageous ≥ 4, because 2 moles are needed to neutralize the two charges of a dye, while the other 2 are interposed with their chains to the other 2 to form 2 cation heads. The same applies to other colouring agents or mixtures of colouring agents such as Caramel Brown and other food-grade colour mixtures.

The composition could also include at least one primary alcohol, for example ethyl alcohol, isopropyl alcohol and n-propyl alcohol.

Alcohol is present in any suitable quantity, between 30% and 80% w/w, for example between 50% and 70% w/w (weight by weight of the composition).

In hydroalcoholic or alcoholic solution, that is to say having an alcohol content > 35° this composition is preferably but not necessarily, implemented with at least one other ingredient in order to solubilize the dye micelles coated with positively charged hydrophilic bilayer in a more lipophilic environment generated by primary alcohol, for example ethyl alcohol.

This ingredient is preferably an amphoteric surfactant, such as Cocamide diethanolamide or Cocamide DEA whose chemical structure is shown in figure 7.

If desired, the amphoteric surfactant is present in a quantity between 0.1% and 50% w/w, for example between 3% and 4% w/w (weight by weight of composition).

The amphoteric surfactant, if desired the Cocamide DEA would then act as solubilizer or disperser in lipophilic environment of the dye molecules surrounded by the covering or masking ingredient.

Preferably, the weight/weight percentage ratio between covering or masking ingredient and amphoteric surfactant (if desired Cocamide DEA) is between 1 and 5 preferably 5.

Clearly, the composition may also include other supplementing elements/compounds, mainly solubilising, such as water, for example deionised or purified, emollients such as glycerine and other ingredients that make the use of the product suitable for its intended use on intact and injured skin or other surfaces.

The sequence of insertion and/or mixing of the different ingredients is very important in the process or method of obtaining this composition.

In the case of an aqueous composition, preferably, in the aqueous solvent, one first solubilises or pre-mixes or pre-masks the expected amount of dye with at least one quaternary ammonium salt (for example CTAC or CTAB) in excess, in order to form the above-mentioned surrounding structure; only at the end the biocidal active substance, for example chlorhexidine gluconate is added under agitation, which dissolves in water without meeting the dye molecules.

If the composition is alcoholic or hydroalcoholic, advantageously, it is inserted the optional amphoteric surfactant, such as Cocamide DEA together with the cationic surfactant CTAC, if desired up to a maximum of 6% (in excess) in order to ensure an improved shielding of the charges between the dye and chlorhexidine and a solubilization of the CTAC micelles + dye charges micelles externally in lipophilic environment such as that generated by alcohol.

Subject-matter of the present invention is also the non-therapeutic use of a composition as described above as a disinfectant or biocide, for example for the disinfection of parts of a patient's body prior to surgery or therapeutic and/or diagnostic treatment, for hand disinfection of health and surgical personnel, for washing or cleaning a patient before surgery, for skin disinfection in injection therapy and other skin applications, even on injured skin, or for prophylaxis in injection therapy.

We will now describe some examples of compositions and their processes or methods of obtaining (clearly illustrative and not exhaustive) according to the present invention also in substitution of specific existing products.

### Example 1

This embodiment is focused on obtaining a water solution based on chlorhexidine digluconate at a concentration 0.1% w/w, more preferably at 0.5% and 2% w/w (weight by weight of the composition) coloured with Caramel Brown at a concentration 0.05% w/w (weight by weight of the composition) able to visibly stain the skin and ensure a stability in undamaged packaging equal to and/ or greater than 24 months.

1% w/w of Caramel Brown dye was mixed with 99% w/w of CTAC to obtain the bilayer shown in figure 5 and allow the negative charges of the dye to bind to the positive charges of the CTAC. The dye solution is then diluted to obtain a coloured aqueous solution of chlorhexidine digluconate at a concentration of 2% w/w.

The preparation procedure is as follows:
a: 1% w/w of Caramel Brown dye is mixed with 99% w/w of CTAC aqueous solution at 30% w/w;
b: 44,7% w/w of the dye mixture referred to in point a. above is mixed with 44,7% w/w of deionised water; and
c: finally under agitation 10,6% w/w of chlorhexidine digluconate solution at 20% w/v (i.e. weight/volume) (density 1,060 g/ml) are added to obtain a final concentration of 2% w/w (weight by weight of the composition) with Caramel Brown dye equal to 0,447% w/w (weight by weight of the composition) and CTAC 13.276% w/w (weight by weight of composition) (44.7% w/w of a 99% w/w solution with a net content of the solution of 30% w/w).

### Example 2

This example is instead focused on obtaining a hydroalcoholic solution based on chlorhexidine digluconate at a concentration 0.1% w/w, more preferably at 0.5% and 2% w/w (weight by weight of the composition), stained with E122 at a concentration 0.01% w/w (weight by weight of the composition) able to visibly stain the skin and ensure stability in undamaged packaging equal to and/or greater than 24 months.

0.1% w/w of E122 dye were mixed sequentially with 0.69% w/w of CTAC 30% w/w solution and 3.45% p/p Cocamide DEA so as to create first the bilayer shown in figure 5 and allow the negative charges of the dye to bind to the positive charges of the CTAC and then to the Cocamide DEA to position itself around the micelles of dye + CTAC and solubilise them in a more lipophilic environment generated by ethyl and/or isopropyl alcohol.

Subsequently, 18.76% w/w of purified water, 66.4% w/w of ethyl alcohol at 96° and finally 10.6% w/w of chlorhexidine gluconate 20% w/v (density 1.060 g/ml) were added under agitation in sequence to the dye solution, in order to obtain a hydroalcoholic solution, that is to say having an alcohol content of 70°, coloured with a concentration of dye E122 at 0.1% w/w CTAC 0.207% w/w, 3.45% Cocamide DEA and chlorhexidine digluconate at a concentration of 2% w/w.

The preparation procedure is as follows:
a: 0.10% w/w of E122 dye is mixed sequentially and under agitation with 0.69% w/w of CTAC (30% w/w solution) and 3.45% w/w Cocamide DEA (preferential ratio of the % w/w of Cocamide DEA/CTAC 511);
b: subsequently 18.76% w/w (weight by weight of the composition) of purified water and 66.4% w/w (weight by weight of the composition) of ethyl alcohol 96° were added under agitation; and
c: finally, under agitation 10.6% w/w of chlorhexidine digluconate solution at 20% w/v (density 1.060 g/ml) was added to give a final concentration of 2% w/w (weight by weight of the composition) and dye E 122 equal to 0.1% w/w (weight by weight of the composition).

Both the composition and the method of production which is the subject-matter of this invention work perfectly in aqueous environment as well as in alcoholic and hydroalcoholic environment to obtain a stably coloured solution (also for 12, 24 or 36 months) able to effectively stain the skin and release biocidal active substance molecules, such as chlorhexidine gluconate in their biocidal action on the transient and resident microbiota of the skin.

A composition according to the present invention is used for visibly staining the skin for the delimitation of the surgical field or for a cutaneous microintervention or microinjection, for example, for the disinfection of parts of a patient's body before surgery or therapeutic and/or diagnostic treatment, for the disinfection of surgical hands or other medical devices, for washing the patient before surgery, for skin disinfection in injection therapy and other applications on injured skin.

## Claims

1. Aqueous, hydroalcoholic or alcoholic liquid composition comprising at least one biocidal active substance comprising or consisting of at least one bisbiguanide or cationic bisbiguanide with a concentration ≥ 0,01 % weight by weight or weight by volume of the composition, at least one dye intended to visibly stain the skin so as to show the presence of the composition on it,
wherein said composition includes at least one quaternary ammonium salt with a long linear chain and three methyl groups bounded to the nitrogen atom (N) intended to perform the function of covering or masking ingredient of said at least one dye to said at least one biocidal active substance or the function of an ingredient preventing electrostatic attraction between said at least one biocidal active substance and said at least one dye,
wherein the molar or molecular ratio between said at least one quaternary ammonium salt and said at least one dye is ≥ 4.

2. Composition according to claim 1, having a stability or half-life of at least 1 month in undamaged packaging, more preferably 12 or 24 or 36 or more months.

3. Composition according to claim 1 or 2, wherein said at least one quaternary ammonium salt comprises one or more of the following: cetyltrimethylammonium chloride (CTAC), cetyltrimethylammonium bromide (CTAB), hexadecyltrimethylammonium bromide, dodecyltrimethylammonium chloride, tetradeciltrimethylammonium chloride, hexadecyltrimethylammonium chloride or other salts thereof.

4. Composition according to claim 1 or 2 or 3, wherein said at least one quaternary ammonium salt is present in a quantity between 0.1% and 30% weight by weight of the composition.

5. Composition according to any one of the preceding claims, where said at least one biocidal active substance is present in a quantity between 0.01% and 10% weight by weight or weight by volume of the composition.

6. Composition according to any one of the preceding claims, wherein said at least one bisbiguanide or cationic bisbiguanide comprises or consists of chlorhexidine gluconate or at least one of its salts.

7. Composition according to any one of the preceding claims, wherein said at least one dye comprises or consists of a food-grade dye which includes anionic functional groups in its chemical structure.

8. Composition according to any one of the preceding claims, wherein said at least one dye is present in a quantity ≥ 0.01% weight by weight of the composition.

9. Composition according to any one of the preceding claims, wherein said at least one quaternary ammonium salt surrounding the molecules of said at least one dye, neutralises the negative charges of the latter and forms a cationic head towards the outside repelling the approach of said at least one biocidal active substance to said at least one dye.

10. Composition according to any one of the preceding claims, comprising at least one primary alcohol, for example ethyl, isopropyl and n-propyl alcohol and including in addition, at least one amphoteric surfactant acting as a solubilising or dispersant of the dye molecules surrounded by this covering or masking ingredient in a lipophilic environment.

11. Composition according to claim 10, where the amphoteric surfactant includes Cocamide DEA.

12. Method of obtaining the composition referred to in the preceding claims, including the initial step of pre-mixing or pre-masking said at least one dye with said at least one quaternary ammonium salt and then adding under stirring to the thus obtained said at least one biocidal active substance.

13. Method according to claim 12 for obtaining a composition according to claim 10 or 11, where said at least one amphoteric surfactant is added before said at least one active biocidal substance.

14. Non-therapeutic use of a composition according to any one of claims 1 to 11 as a disinfectant or biocide.

15. Use according to claim 14 for the disinfection of a patient's body parts before surgery or diagnostic and/or therapeutic treatment, disinfection of the hands of healthcare and surgical staff, cleansing of a patient's body before surgery, or prophylaxis in injection therapy.
